(19) Europäisches Patentamt

European Patent Office

Office européen des brevets

(11) **EP 1 142 761 B1**

(12) **EUROPÄISCHE PATENTSCHRIFT**

(45) Veröffentlichungstag und Bekanntmachung des Hinweises auf die Patenterteilung:
**15.02.2006  Patentblatt 2006/07**

(51) Int Cl.:
***B60R 16/02*** *(2006.01)*

(21) Anmeldenummer: **01105931.8**

(22) Anmeldetag: **09.03.2001**

(54) **Vorrichtung und Verfahren zur Einstellung der Bordnetzspannung**

Device and procedure for adjusting the on-board network voltage

Dispositif et procédé pour régler la tension du réseau de bord

(84) Benannte Vertragsstaaten:
**DE ES FR GB IT SE**

(30) Priorität: **08.04.2000  DE 10017693**

(43) Veröffentlichungstag der Anmeldung:
**10.10.2001  Patentblatt 2001/41**

(73) Patentinhaber: **Bayerische Motoren Werke Aktiengesellschaft**
**80809 München (DE)**

(72) Erfinder: **Froeschl, Joachim**
**82229 Seefeld (DE)**

(56) Entgegenhaltungen:
**EP-A- 0 783 994**          **DE-A- 19 745 849**
**DE-A- 19 829 150**

**Beschreibung**

Die Erfindung betrifft eine Vorrichtung und ein Verfahren zur Einstellung der Bordnetzspannung.

Herkömmlicherweise liefert ein Generator in einem Fahrzeug eine von den Betriebsbedingungen abhängige Ladespannung. Bei moderneren Fahrzeugen wird ferner ein Generator verwendet, bei dem die Ladespannung in gewissen Bereichen einstellbar ist. In diesem Zusammenhang ist es bekannt, die Bordnetzspannung zentral ermitteln zu lassen und aufgrund der festgestellten Bordnetzspannung die Ladespannung am Generator einzustellen.

Allerdings wird die vom Generator gelieferte Spannung von den Verbrauchern beeinflußt, so dass mit einer zentral ermittelten Bordspannung selten ein optimaler Spannungswert im Bordnetz erreicht werden kann. Insbesondere tritt ein Spannungsabfall über die vorhandenen Versorgungsleitungen zu den verschiedenen Verbrauchern auf, so dass sich bei verschiedenen Steuergeräten oder Komponenten unterschiedliche anliegende Bordnetzspannungen ergeben. Die Spannungsdifferenz zwischen der tatsächlich an einem Steuergerät anliegenden Versorgungsspannung und einer von dem Generator gelieferten Ladespannung ist u. a. vom Stromfluß, dem Leitungsquerschnitt bzw. dem Übergangswiderstand in den Versorgungsleitungen abhängig. Die Schrift DE-A-19745849 wird als nächstliegender Stand der Technik betrachtet.

Aufgabe der vorliegenden Erfindung ist es, eine Vorrichtung und ein Verfahren zur Einstellung der Bordnetzspannung anzugeben, mit der bzw. dem eine möglichst hohe Ladespannung bei einem bezüglich seiner Ladespannung einstellbaren Generator erreicht werden kann, ohne dass die an der Stromversorgung angeschlossenen Geräte eine Beschädigung erfahren.

Diese Aufgabe wird durch die im Anspruch 1 bzw. Anspruch 6 genannten Merkmale gelöst.

Ein wesentlicher Gedanke der vorliegenden Erfindung liegt darin, die tatsächliche Spannung, welche an einem Steuergerät anliegt, zu ermitteln und über eine Datenleitung an eine Generatorsteuereinrichtung zu übertragen, welche unter Berücksichtigung dieser Spannung bzw. dieser Spannungen die Ladespannung des Generators einstellt. Insgesamt kann die Ladespannung des Generators dabei so eingestellt werden, dass eine möglichst hohe Ladespannung erreicht wird, ohne dass irgendein maximaler Versorgungsspannungswert hinsichtlich eines Steuergerätes überschritten wird.

Durch diese Maßnahmen ist eine Erhöhung der Ladespannung möglich. Selbst Spannungserhöhungen im Bereich von 0,5 Volt führen bereits zu einer deutlich besseren Ladebilanz, was ein schnelleres und höheres Aufladen der Batterie zur Folge hat. Weiterhin können die lokalen Maximalspannungen der einzelnen Steuergeräte besser berücksichtigt werden. Würde man die Ladespannung des Generators auf die Niedrigste der Maximalspannungen der aktiven Steuergeräte einstellen, so läßt man ein Spannungspotential unberücksichtigt, das sich durch den Masseversatz zwischen den einzelnen Steuergeräten und dem Generator ergibt.

Als Datenverbindung kann vorzugsweise ein Datenbus verwendet werden, wie er bereits in Fahrzeugen Verwendung findet. Zukünftig werden alle Steuergeräte über entsprechende Datenbusse miteinander kommunizieren, so dass die zusätzliche Übermittlung der einzelnen Ladespannungen, die an den verschiedenen Steuergeräten anliegen, fast keinen Mehraufwand erfordert. Um die Steuergeräte nicht zu beschädigen, sollte der Generatorsteuereinrichtung jeweils ein Maximalwert einer Versorgungsspannung für jedes Steuergerät bekannt sein. Ein solcher Maximalwert kann in jedem Steuergerät hinterlegt sein und dann über die bereits oben erwähnte Datenverbindung an die Generatorsteuereinrichtung übertragen werden. Alternativ können die Maximalwerte auch in der Generatorsteuereinrichtung selbst abgelegt sein. Die erste Variante hätte den Vorteil, dass eine offene Architektur möglich ist, in der jedes Steuergerät seinen Maximalwert der Generatorsteuereinrichtung übermittelt und daher ohne weiteres ausgetauscht werden kann.

Geht man davon aus, dass zwischen den einzelnen Steuergeräten und dem Generator jeweils ein Masseversatz auftritt, der u. a. vom jeweiligen Strombedarf und dem Übergangswiderstand zum jeweiligen Steuergerät abhängt, so hat man es unweigerlich mit einem dynamischen System zu tun, welches je nach Stromaufnahme der einzelnen Steuergeräte eine entsprechende Ladespannungsregelung für den Generator erfordert. Um zu große Schwankungen auszuschließen, können Filterungen bzw. Mittelwertbildungen der Versorgungsspannung an den einzelnen Steuergeräten vorgenommen werden.

Nimmt man ferner an, dass am Generator eine Spannung $U_G$ sowie an den einzelnen Steuergeräten eine Versorgungsspannung von $U_i$ (i = 1 - n) vorliegen, so ergibt sich ein mögliches Spannungspotential, um das die Ladespannung am Generator angehoben werden kann, aus den Differenzen der maximalen Versorgungsspannungen der einzelnen Steuergeräte und der jeweils am Steuergerät anliegenden tatsächlichen Versorgungsspannung. Nimmt man von diesen Differenzen den Minimumwert, so ist dies der Wert, um den die Ladespannung erhöht werden kann, ohne dass irgendein Steuergerät beschädigt wird.

Die einzelnen Bordnetzspannungen, also die Bordnetzspannung am Generator und die Versorgungsspannungen an den einzelnen Steuergeräten, können auch für Diagnosezwecke verwendet werden. Überschreitet beispielsweise die Differenz zwischen der Bordnetzspannung $U_G$ und der lokal gemessenen Spannungen $U_i$ (i = 1 - n) einen vorgegebenen Schwellwert, so kann auf einen Fehler in der Spannungsversorgung oder in der Masseanbindung geschlossen werden. Werden nun die Diagnoseschwellen aller Steuergeräte überschritten, so ist entweder ein zentraler Versorgungspunkt fehlerhaft oder die Generatorsteuereinrichtung selbst. Bei einem Mehrspannungssystem in einem Fahrzeug, beispielsweise bei gleichzeitiger Verwendung von 12 V und 42 V für verschiedene Bereiche, ist es mit obiger Diagnose auch mögliche, einen Kurzschluss zwischen diesen beiden Spannungsbereichen zu erfassen.

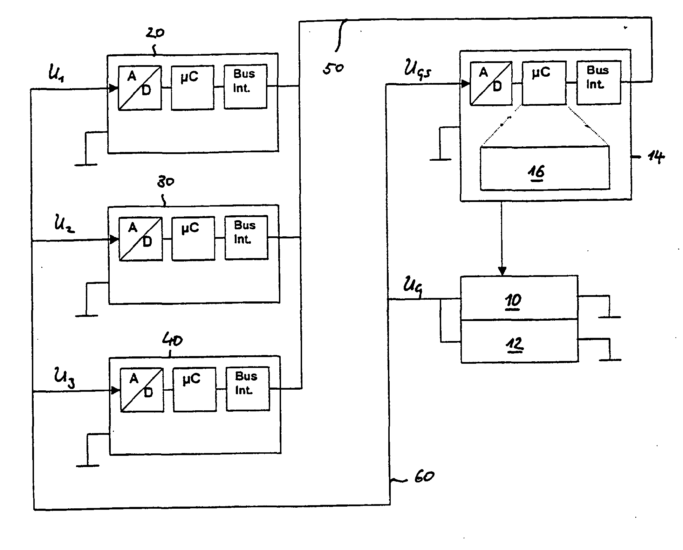

Ein Ausführungsbeispiel der vorliegenden Erfindung wird nachfolgend mit Bezug auf die einzige beiliegende Zeichnung näher erläutert. Die einzige Zeichnung zeigt ein schematisches Blockschaltdiagramm gemäß einer Ausführungsform der vorliegenden Erfindung. Dabei wird die Erfindung anhand einer Vorrichtung in einem Fahrzeug näher erläutert.

In dem Blockschaltdiagramm ist schematisch ein Generator 10 dargestellt, der eine Ladespannung $U_G$ erzeugt und diese zum einen an ein Bordnetz 60 und zum anderen an eine direkt an den Generator 10 angeschlossene Batterie 12 abgibt. Sowohl der Generator 10 als auch die Batterie 12 sind mit Masse verbunden, wobei die Masseverbindung über die Karosserie bei einem Kraftfahrzeug geführt ist.

Der Generator kann in einem bestimmten Ladespannungsbereich, beispielsweise 9 bis 16 Volt, geregelt werden. Dazu ist er mit einer Generatorsteuereinrichtung 14 verbunden, die eine Einheit zur Berechnung der Ladespannung 16 umfaßt. Die Einheit 16 erzeugt aufgrund von später noch zu erläuternden, vorliegenden Informationen ein Signal, welches an den Generator 10 abgegeben wird, der daraufhin die Ladespannung entsprechend einstellt.

Die Generatorsteuereinrichtung 14 ist zum einen an das Bordnetz 60 angeschlossen, wobei unter Berücksichtigung des Masseversatzes eine Versorgungsspannung $U_{GS}$ an der Generatorsteuereinrichtung 14 anliegt. Die Generatorsteuereinrichtung 14 umfaßt einen A/D-Wandler, einen Mikrocontroller $\mu$C sowie ein Bus-Interface. Das Bus-Interface stellt eine Schnittstelle zu einem Datenbus 50 dar, welche die Generatorsteuereinrichtung mit anderen Steuergeräten 20, 30 und 40 verbindet.

Diese Steuergeräte 20, 30 und 40 sind ebenso am Bordnetz 60 angeschlossen, wobei unter Berücksichtigung des Masseversatzes am Steuergerät 20 die Versorgungsspannung $U_1$, am Steuergerät 30 die Versorgungsspannung $U_2$ und am Steuergerät 40 die Versorgungsspannung $U_3$ anliegen.

Jedes Steuergerät 20, 30 und 40 umfaßt ebenfalls einen A/D-Wandler, einen Mikrocontroller $\mu$C sowie ein Bus-Interface, wobei letzteres das jeweilige Steuergerät 20, 30 und 40 an den Datenbus 50 ankoppelt.

Abhängig von den einzelnen Übergangswiderständen des jeweiligen Steuergerätes 20, 30 und 40 bezogen auf den Massepunkt des Generators 10 sowie dem jeweiligen Strombedarf kommt es zu einem Masseversatz zu den einzelnen Steuergeräten 20, 30, 40, so dass die Spannungen $U_1$, $U_2$ und $U_3$ mehr oder weniger von der Generatorladespannung $U_G$ abweichen.

In jedem Steuergerät 20, 30 und 40 sowie in der Generatorsteuereinrichtung 14 wird nun über den jeweiligen A/D-Wandler und den jeweiligen Mikrocontroller die an diesem Steuergerät anliegende Versorgungsspannung bestimmt. Diese Spannungswerte werden mit einem nicht näher dargestellten Filter oder Mittelwertbildner über einen bestimmten Zeitraum gemittelt und unter Zwischenschaltung des Businterfaces (Bus Int.) über den Datenbus 50 an die Generatorsteuereinrichtung 14 übertragen. Femer werden von jedem Steuergerät 20, 30 und 40 die für dieses Steuergerät jeweils zutreffenden, maximal zulässigen Versorgungsspannungswerte über den Datenbus 50 an die Generatorsteuereinrichtung 14 übergeben. Diese maximalen Spannungswerte werden nachfolgend mit $U_{1max}$, $U_{2max}$ und $U_{3max}$ bezeichnet.

Die Einheit zur Berechnung der Ladespannung bildet nun jeweils die Differenz einer jeweiligen maximalen Versorgungsspannung eines Steuergerätes 20, 30 und 40 - also $U_{1max}$, $U_{2max}$ und $U_{3max}$ - mit der jeweils tatsächlich anliegenden Versorgungsspannung $U_i$ (i = 1 - 3) und bildet von diesen Differenzen den Minimumwert:

$$\delta U = \min \left( U_{1max} - U_1,\ U_{2max} - U_2,\ U_{3max} - U_3 \right)$$

Der Minimalwert $\delta U$ gibt nun diejenige Spannung an, um welche die Ladespannung erhöht werden kann, ohne dass irgendein Steuergerät beschädigt wird. Die Einheit zur Berechnung der Ladespannung 16 bestimmt aus der so ermittelten Spannungserhöhung $\delta U$ ein entsprechendes Signal und sendet dieses an den Generator 10, der daraufhin die Generatorladespannung $U_G$ um einen entsprechenden Wert erhöht. Die Batterie 12 profitiert von dieser höheren Ladespannung in Form eines schnelleren Ladevorganges und eines höheren Ladezustandes. Insgesamt wird die Ladebilanz des Fahrzeugs mit der vorliegenden Erfindung positiv beeinflusst, da immer ein maximal möglicher Ladespannungswert gewählt wird. Zudem wird sichergestellt, dass bei keinem der Steuergeräte 20, 30 und 40 eine Überspannung auftritt. Dabei werden die lokalen Maximalspannungen der einzelnen Steuergeräte besser berücksichtigt. Werden nun die ermittelten Spannungen mit verschiedenen Schwellen verglichen, so kann man aus den Spannungen auch auf Fehler in der Versorgung oder einem zu hohen Verbraucherstrom schließen.

Insgesamt stellt die vorliegende Erfindung somit eine neue Möglichkeit zur optimaleren Einstellung einer Bordnetzspannung dar.

**Patentansprüche**

1. Vorrichtung zur Einstellung der Bordnetzspannung umfassend

   - einen Generator (10) mit einer steuerbaren Ladespannung,
   - eine Generatorsteuereinrichtung (14), welche zur Berechnung der Ladespannung ausgebildet ist und ein entsprechendes Signal an den Generator abgibt,
   - und zumindest ein vom Generator (10) mit Strom versorgtes Steuergerät (20, 30, 40), welches eine Spannungsermittlungseinrichtung umfaßt,

   **dadurch gekennzeichnet,**
   **dass** eine Datenverbindung (50) zwischen dem zumindest einen Steuergerät (20, 30, 40) und der Generatorsteuereinrichtung (14) vorgesehen ist, über welche die beim Steuergerät (20, 30, 40) ermittelte Versorgungsspannung an die Generatorsteuereinrichtung (14) übermittelbar ist, und dass die Generatorsteuereinrichtung (14) derart ausgebildet ist, um die Ladespannung des Generators (10) unter Berücksichtigung der zumindest einen übermittelten Versorgungsspannung zu bestimmen.

2. Vorrichtung nach Anspruch 1,
   **dadurch gekennzeichnet,**
   **dass** das zumindest eine Steuergerät (20, 30, 40) und die Generatorsteuereinrichtung (14) über einen Datenbus (50) miteinander verbunden sind.

3. Vorrichtung nach Anspruch 1 oder 2,
   **dadurch gekennzeichnet,**
   **dass** für jedes Steuergerät (20, 30, 40) ein Maximalwert einer Versorgungsspannung hinterlegt ist.

4. Vorrichtung nach Anspruch 3,
   **dadurch gekennzeichnet,**
   **daß** die Maximalwerte im jeweiligen Steuergerät (20, 30, 40) hinterlegt sind und über die Datenverbindung (50) an die Generatorsteuereinrichtung (14) übertragbar und/oder direkt in der Generatorsteuereinrichtung (14) abgelegt sind.

5. Vorrichtung nach Anspruch 3 oder 4,
   **dadurch gekennzeichnet,**
   **dass** die Generatorsteuereinrichtung (14) derart ausgebildet ist, um für jedes Steuergerät (20, 30, 40) die Differenz zwischen der für dieses Steuergerät (20, 30, 40) erlaubten Maxiamalversorgungsspannung und der tatsächlich an dem Steuergerät (20, 30, 40) anliegenden Spannung zu bilden und den Generator (10) derart zu beaufschlagen, dass dieser die Ladespannung um den Minimumwert aus diesen Differenzen erhöht.

6. Verfahren zur Einstellung der Bordnetzspannung mit den Schritten:

   - Erfassen zumindest einer Versorgungsspannung bei einem Steuergerät (20, 30, 40),
   - Übermitteln dieser Versorgungsspannung an eine Generatorsteuereinrichtung (14),
   - Bestimmung einer Ladespannung eines bezüglich seiner Ladespannung steuerbaren Generators (10) unter Berücksichtigung der zumindest einen Versorgungsspannung und
   - Übermittlung eines dieser Ladespannung entsprechenden Signals an den Generator (10).

7. Verfahren nach Anspruch 6,
   **dadurch gekennzeichnet,**
   **dass** der Generatorsteuereinrichtung (14) für jedes Steuergerät (20, 30, 40) ein maximaler Versorgungswert zur Verfügung gestellt wird und dass die Ladespannung unter Berücksichtigung der Differenzen zwischen der maximalen Versorgungsspannung und der tatsächlich anliegenden Spannung für jedes Steu-ergerät (20, 30, 40) bestimmt wird.

8. Verfahren nach Anspruch 7,
   **dadurch gekennzeichnet,**
   **dass** der Minimalwert aus den Differenzen gebildet wird und die Ladespannung um diesen Minimalwert erhöht wird.

**EP 1 142 761 B1**

**Claims**

1. A device for adjusting the on-board electrical system voltage comprising

   - a generator (10) with a controllable charging voltage,
   - a generator control mechanism (14), which is configured to calculate the charging voltage and issues a corresponding signal to the generator, and
   - at least one control apparatus (20, 30, 40), which is supplied with power by the generator (10) and comprises a voltage determining mechanism,

   **characterised in that**,
   a data connection (50) is provided between the at least one control apparatus (20, 30, 40) and the generator control mechanism (14), via which the supply voltage determined at the control apparatus (20, 30, 40) can be transmitted to the generator control mechanism (14), and **in that** the generator control mechanism (14) is configured in such a way as to determine the charging voltage of the generator (10) taking into account the at least one transmitted supply voltage.

2. A device according to claim 1,
   **characterised in that**,
   the at least one control apparatus (20, 30, 40) and the generator control mechanism (14) are connected to one another via a data bus (50).

3. A device according to claim 1 or 2,
   **characterised in that**,
   a maximum value of a supply voltage is stored for each control apparatus (20, 30, 40).

4. A device according to claim 3,
   **characterised in that**,
   the maximum values are stored in the respective control apparatus (20, 30, 40) and can be transmitted via the data connection (50) to the generator control mechanism (14), and/or are filed directly in the generator control mechanism (14).

5. A device according to claim 3 or 4,
   **characterised in that**,
   the generator control mechanism (14) is configured in such a way as to form, for each control apparatus (20, 30, 40), the difference between the maximum supply voltage permitted for this control apparatus (20, 30, 40) and the voltage actually present at the control apparatus (20, 30, 40) and to act on the generator in such a way that it increases the charging voltage by the minimum value from these differences.

6. A method for adjusting the on-board electrical system voltage comprising the steps:

   - detecting at least one supply voltage in a control apparatus (20, 30, 40),
   - transmitting this supply voltage to a generator control mechanism (14),
   - determining a charging voltage of a generator (10) which can be controlled with respect to its charging voltage taking into account the at least one supply voltage and
   - transmitting a signal corresponding to this charging voltage to the generator (10).

7. A method according to claim 6,
   **characterised in that**,
   the generator control mechanism (14) is provided with a maximum supply value for each control apparatus (20, 30, 40) and **in that** the charging voltage is determined taking into account the differences between the maximum supply voltage and the voltage actually present for each control apparatus (20, 30, 40).

8. A method according to claim 7, **characterised in that**,
   the minimum value is formed from the differences and the charging voltage is increased by this minimum value.

**Revendications**

1. Dispositif permettant de régler la tension du circuit de bord, comprenant

   - un générateur (10) ayant une tension de charge pouvant être commandée,
   - un dispositif de commande du générateur (14) pour calculer la tension de charge et émettant un signal correspondant vers le générateur, et
   - au moins un appareil de commande (20, 30, 40) alimenté en courant par le générateur (10), comprenant un dispositif de détermination de la tension,

   **caractérisé en ce qu'**
   il est prévu une liaison de données (50) entre l'appareil de commande (20, 30, 40) et le dispositif de commande du générateur (14), par l'intermédiaire de laquelle la tension d'alimentation déterminée au niveau de l'appareil de commande (20, 30, 40) peut être transmise au dispositif de commande du générateur (14), et
   le dispositif de commande du générateur (14) détermine la tension de charge du générateur (10) en prenant en compte la tension d'alimentation transmise.

2. Dispositif selon la revendication 1,
   **caractérisé en ce que**
   l'appareil de commande (20, 30, 40) et le dispositif de commande du générateur (14) sont reliés l'un à l'autre par un bus de données (50).

3. Dispositif selon la revendication 1 ou 2,
   **caractérisé en ce que**
   chaque appareil de commande (20, 30, 40) possède une valeur maximale de tension d'alimentation.

4. Dispositif selon la revendication 3,
   **caractérisé en ce que**
   les valeurs maximales sont situées dans l'appareil de commande respectif (20, 30, 40) et peuvent être transmises, par la liaison de données (50), à l'appareil de commande du générateur (14), et/ou sont directement stockées dans l'appareil de commande du générateur (14).

5. Dispositif selon la revendication 3 ou 4,
   **caractérisé en ce que**
   le dispositif de commande du générateur (14) forme, pour chaque appareil de commande (20, 30, 40), la différence entre la tension d'alimentation maximale autorisée pour cet appareil de commande (20, 30, 40) et la tension effectivement appliquée au niveau de l'appareil de commande (20, 30, 40), et sollicite le générateur (10) de telle sorte que celui-ci augmente la tension de charge de la valeur minimale issue de cette différence.

6. Procédé de réglage de la tension du circuit de bord, comprenant les étapes suivantes :

   - enregistrement d'une tension d'alimentation au niveau d'un appareil de commande (20, 30, 40),
   - transmission de cette tension d'alimentation à un dispositif de commande du générateur (14),
   - détermination d'une tension de charge d'un générateur (10) dont la tension de charge est réglable, en prenant en compte la tension d'alimentation, et
   - transmission au générateur (10) d'un signal correspondant à cette tension de charge.

7. Procédé selon la revendication 6,
   **caractérisé en ce que**
   le dispositif de commande du générateur (14) reçoit, pour chaque appareil de commande (20, 30, 40), une valeur d'alimentation maximale et la tension de charge est déterminée en prenant en compte les différences entre la tension d'alimentation maximale et la tension effectivement appliquée pour chaque appareil de commande (20, 30, 40).

8. Procédé selon la revendication 7,
   **caractérisé en ce que**
   la valeur minimale est formée à partir des différences et la tension de charge est augmentée de cette valeur minimale.